# EUROPÄISCHE PATENTSCHRIFT

(11) **EP 2 250 406 B1**
(45) Veröffentlichungstag und Bekanntmachung des Hinweises auf die Patenterteilung: **13.06.2012**
(21) Anmeldenummer: 09718907.0
(22) Anmeldetag: 20.02.2009
(51) Int. Cl.: F16H 61/12, F16H 59/68, F16H 61/688

(54) **VERFAHREN ZUM SPERREN VON UNZULÄSSIGEN SCHALTVORGÄNGEN BEI EINEM GETRIEBE UND SCHALTUNGSANORDNUNG FÜR EIN GETRIEBE**
METHOD FOR BLOCKING INADMISSIBLE GEAR SHIFTS IN A TRANSMISSION AND SHIFT ASSEMBLY FOR A TRANSMISSION
PROCÉDÉ PERMETTANT D'EMPÊCHER DES OPÉRATIONS DE CHANGEMENT DE VITESSE INADMISSIBLES SUR UNE BOÎTE DE VITESSES ET SYSTEME DE COMMANDE POUR UNE BOÎTE DE VITESSES

(30) Priorität: 13.03.2008 DE 102008000640
(43) Veröffentlichungstag der Anmeldung: 17.11.2010
(73) Patentinhaber: ZF Friedrichshafen AG, 88038 Friedrichshafen (DE)
(72) Erfinder: DREIBHOLZ, Ralf, 88074 Meckenbeuren (DE); FUESSL, Andreas, 88079 Kressbronn (DE); REISCH, Matthias, 88214 Ravensburg (DE)
(86) Internationale Anmeldenummer: PCT/EP2009/052006
(87) Internationale Veröffentlichungsnummer: WO 2009/112337

(56) Entgegenhaltungen:
- WO-A2-01/88409
- AU-B2- 632 234
- FR-A1- 2 805 587

## Beschreibung

Die vorliegende Erfindung betrifft ein Verfahren zum Sperren von unzulässigen Schaltvorgängen bei einem Getriebe gemäß der im Oberbegriff des Patentanspruches 1 näher definierten Art. Ferner betrifft die Erfindung eine Schaltungsanordnung für ein Getriebe mit einem Steuergerät und mehreren Betätigungseinrichtungen gemäß der im Oberbegriff des Patentanspruches 13 näher definierten Art.

Aus der Fahrzeugtechnik sind automatisch schaltende Getriebe bekannt. Zum einen gibt es Getriebe, bei denen jedem Gang ein Lastschaltelement zugeordnet ist. Zudem gibt es auch Getriebe, die prinzipiell mindestens aus zwei parallel schaltbaren Teilgetrieben bestehen, die jedes für sich mindestens ein Lastschaltelement und eine Reihe von zum Beispiel formschlüssig schaltenden Schalteinrichtungen besitzen. Im jeweils lastenfreien Teilgetriebe können Gänge durch Einlegen der Schalteinrichtungen für den späteren Schaltvorgang vorbereitet werden. Das Betätigen dieser Schalteinrichtungen wird mithilfe externer Energiequellen zum Beispiel hydraulisch, elektromechanisch, elektromagnetisch oder pneumatisch durchgeführt. Ein Verschalten bei dem Getriebe, z.B. wenn durch einen Steuerungsfehler zwei Schalteinrichtungen gleichzeitig durch die Betätigungseinrichtungen betätigt werden, die sich gegenseitig blockieren, kann zum Ausfall des Getriebes oder sogar zur Fahrstabilitätsverminderung führen.

Dies wird bei bekannten Getrieben mit formschlüssig schaltenden Schalteinrichtungen durch z. B. mechanische Sperren verhindert. Um jedoch möglichst kompakt aufgebaute Getriebe zu realisieren, ist es sinnvoll, die notwendigen Betätigungseinrichtungen unmittelbar in der Nähe der zu schaltenden Schalteinrichtungen zu positionieren. Wenn jede Schalteinrichtungen aber eine isolierte Betätigungseinrichtung aufweist, ist die erforderliche mechanische Sperre sehr aufwändig und damit bauraum- und kostenintensiv. Beispielsweise bei einem Getriebe bei dem die Betätigungseinrichtungen in Form von Elektromotoren in den Getriebewellen angeordnet sind, ist eine mechanische Sperreinrichtung nicht realisierbar.

Das Dokument WO 01/88409 offenbart alle Merkmale des Oberbegriffs der Ansprüche 1 und 13.

Demnach liegt der vorliegenden Erfindung die Aufgabe zu Grunde, ein Verfahren und eine Schaltungsanordnung der eingangs beschriebenen Gattung vorzuschlagen, welche ein Sperren von unzulässigen Schaltvorgängen ohne mechanische Sperreeinrichtungen kostengünstig und sicher realisieren.

Diese Aufgabe wird erfindungsgemäß durch die Merkmale des Patentanspruches 1 und auch durch die Merkmale des Patentanspruches 13 gelöst. Weitere vorteilhafte Ausgestaltungen ergeben sich aus den jeweiligen Unteransprüchen und den Zeichnungen.

Demnach wird ein Verfahren zum Sperren von unzulässigen Schaltvorgängen bei einem Getriebe mit mehreren Schalteinrichtungen vorgeschlagen, die zum Durchführen eines Schaltvorganges von Betätigungseinrichtungen bewegt werden, wenn ein Schaltbefehl von einem Steuergerät an die jeweilige Betätigungseinrichtung ausgegeben wird, wobei die Betätigungseinrichtungen zum Datenaustausch derart untereinander und mit dem Steuergerät verbunden werden, dass die Ansteuerung der Betätigungseinrichtung der zu schaltenden Schalteinrichtung in Abhängigkeit einer Freigabe mindestens einer weiteren Betätigungseinrichtung durchgeführt wird.

Mit dem erfindungsgemäß vorgeschlagenen Verfahren kann sichergestellt werden, dass immer nur eine einem gemeinsamen Getriebe bzw. Teilgetriebe zugeordnete Betätigungseinrichtung und die damit verbundene Schalteinrichtung von dem Steuergerät betätigt wird. Somit können Fehlschaltungen und die damit verbundenen Komfort- und Stabilitätseinbußen sicher vermieden werden. Durch die vorgeschlagene elektronische Sperrung zum Verhindern von unzulässigen Schaltvorgängen werden somit die sonst erforderlichen mechanischen Sperreinrichtungen ersetzt, wodurch nicht nur die Herstellungskosten sondern auch Bauraum eingespart werden kann.

Im Rahmen einer möglichen Ausführungsvariante der Erfindung kann vorgesehen sein, dass an die Vorortsteuerung jeder Betätigungseinrichtung Zustandsinformationen der Vorortsteuerung der jeweils anderen Betätigungseinrichtungen übertragen werden, so dass eine gegenseitige Überwachung der Vorortsteuerungen der Betätigungseinrichtungen durchgeführt wird. Durch die vorgesehene Überwachung der Betätigungseinrichtungen untereinander können Fehlschaltungen gänzlich vermieden werden. Als Zustandsinformationen können sämtliche Informationen ausgetauscht werden, die für eine Überwachung erforderlich sind. Beispielsweise können diese Zustandsinformationen über einen Hallsensor, einen Winkelgeber, einen Linearsensor oder dergleichen erhalten bzw. übertragen werden. Vorzugsweise können die Zustandsinformationen z. B. über das Getriebesteuergerät oder dergleichen übertragen werden.

Beispielsweise kann im Rahmen des vorgeschlagenen Verfahrens durch die Vorortsteuerung jeder Betätigungseinrichtung eine vom Getriebesteuergerät vorgegebene Sollpositionen aktiv eingeregelt werden, wobei durch die Vorortsteuerung in der jeweils anderen Betätigungseinrichtung die Freigabe entzogen wird, wenn ein Verlassen eines zulässigen Positionsbereiches der zugeordneten Schalteinrichtung erkannt wird. Beispielsweise kennen sämtliche oder auch nur einige der Vorortsteuerung beziehungsweise Controller zum Beispiel erlaubte Kombinationen von Schaltvorgängen und die Status der jeweiligen anderen Controller. Es ist zum Beispiel denkbar, dass sämtliche oder auch nur ein Teil der Soll- und Istpositionen beziehungsweise der zulässigen Toleranzbänder untereinander ausgetauscht werden. Beispielsweise kann die Freigabe dadurch entzogen werden, dass die Energieversorgung der Vorortsteuerung der aktiven Betätigungseinrichtung abgeschaltet wird. Es sind jedoch auch andere Vorgehensweisen denkbar, die ein Entziehen der Freigabe realisieren.

Gemäß einer anderen Ausführung der Erfindung kann vorgesehen sein, dass durch das Steuergerät oder dergleichen die Freigabe entzogen wird, wenn durch das Steuergerät ein Verlassen eines zulässigen Positionsbereiches der zugeordneten Schalteinrichtung erkannt wird.

Eine nächste mögliche Variante der Erfindung kann vorsehen, dass die zulässigen Positionsbereiche oder dergleichen für die Vorortsteuerung jeder Betätigungseinrichtung durch das Steuergerät vorgegeben werden. Auf diese Weise kann das Verlassen der zulässigen Positionsbereiche ebenfalls überwacht werden.

Im Rahmen einer weiteren Ausführungsvariante der vorliegenden Erfindung kann vorgesehen sein, dass ein an eine Vorortsteuerung einer Betätigungseinrichtungen ausgegebener Schaltbefehl auch an die Vorortsteuerung jeder inaktiven Betätigungseinrichtung übertragen wird, wobei bei Erkennen eines zulässigen Schaltbefehls ein entsprechendes Freigabesignal von den Vorortsteuerungen der inaktiven Betätigungseinrichtungen an die Vorortsteuerung der aktiven Betätigungseinrichtung gesendet wird. Auf diese Weise wird eine vereinfachte Überwachungsstrategie angegeben. Dabei müssen die inaktiven, also die keinen Schaltvorgang ausführenden Betätigungseinrichtungen z. B. die Energieversorgung der aktiven Betätigungseinrichtung zum Ausführen des Schaltbefehls freigeben.

Wenn das erfindungsgemäß vorgeschlagene Verfahren bei einem Doppelkupplungsgetriebe mit zwei Teilgetrieben eingesetzt wird, bei denen die Betätigungseinrichtungen für ein Teilgetriebe in unterschiedlichen Wellen angeordnet werden, kann vorgesehen sein, dass sich die Betätigungseinrichtungen einer Welle gegenseitig überwachen. Somit wird sichergestellt, dass in einem Teilgetriebe nicht zusätzlich eine weitere Schalteinrichtung bestätigt wird. Das erfindungsgemäße Sicherheitskonzept kann auch bei dem Doppelkupplungsgetriebe die jeweiligen Zustandsinformationen zwischen den jeweiligen Betätigungseinrichtungen untereinander austauschen.

Vorzugsweise kann vorgesehen sein, dass bei den Betätigungseinrichtungen einer Getriebewelle, also bei Betätigungseinrichtungen, die unterschiedlichen Teilgetrieben zugeordnet sind, durch die Vorortsteuerung der nicht aktiven Betätigungseinrichtung die Freigabe der aktiven Betätigungseinrichtung in der gemeinsamen Getriebewelle erfolgt. Zum Beispiel kann im Rahmen der Freigabe die Leistungselektronik der jeweils anderen Betätigungseinrichtung bei einem zulässigen Schaltbefehl frei geschaltet werden. Es sind auch andere Vorgehensweisen möglich.

Die der Erfindung zu Grunde liegende Aufgabe wird auch durch eine Schaltungsanordnung für ein Getriebe mit einem Steuergerät und mehreren Betätigungseinrichtungen zum Betätigen von Schalteinrichtungen gelöst, wobei die Betätigungseinrichtungen zumindest einer Welle zugeordnet sind und wobei die Betätigungseinrichtungen zum Datenaustausch derart untereinander und mit dem Steuergerät verbunden sind, dass die Ansteuerung der Betätigungseinrichtungen der zu schaltenden Schalteinrichtungen in Abhängigkeit einer Freigabe mindestens einer Betätigungseinrichtung durchführbar ist.

Die erfindungsgemäß vorgeschlagene Schaltungsanordnung kann bei beliebigen Getrieben eingesetzt werden, um ein Sicherheitskonzept bei den Getrieben zu realisieren, welches ein Blockieren des Getriebes auf elektronischem Wege durch die Betätigung mehrerer Schalteinrichtungen gleichzeitig verhindert.

Gemäß einer nächsten Ausgestaltung der Erfindung kann vorgesehen sein, dass bei einem Einsatz in einem Doppelkupplungsgetriebe die Betätigungseinrichtungen für ein Teilgetriebe in unterschiedlichen Wellen angeordnet sind, wobei dann die Schaltungsanordnung derart ausgestaltet ist, dass sich die Betätigungseinrichtungen einer Welle gegenseitig freigegeben. Vorzugsweise kann dies dadurch realisiert werden, dass jeweils eine Freigabe-Verbindung zum gegenseitigen Freigeben zwischen den Betätigungseinrichtungen einer Welle vorgesehen ist. Beispielsweise kann die Freigabeverbindung jeweils die Vorortsteuerung der einen Betätigungseinrichtung mit der Leistungselektronik der anderen Betätigungseinrichtung verbinden. Somit kann der Schaltbefehl bei der einer aktiven Betätigungseinrichtung erst durchgeführt werden, wenn eine Freigabe durch die andere, nicht aktive, der gemeinsamen Welle zugeordneten Betätigungseinrichtung erfolgt. Es sind auch andere Verbindungsmöglichkeiten denkbar.

Vorzugsweise kann die Erfindung unabhängig von seinen verschiedenen Ausführungsvarianten bei einem Getriebe, insbesondere einen Doppelkupplungsgetriebe, welches in einer noch nicht veröffentlichten Druckschrift DE 10 2006 049 274 der Anmelderin beschrieben wird, auf deren Inhalt vollständig Bezug genommen wird, verwendet beziehungsweise eingesetzt werden, um die in zumindest einer Vorgelegewelle vorgesehenen Betätigungseinrichtungen der Schalteinrichtungen erfindungsgemäß anzusteuern, um Fehlschaltungen zu vermeiden.

Nachfolgend wird die vorliegende Erfindung anhand der Zeichnungen näher erläutert. Es zeigen:
Fig. 1 eine schematische Ansicht eines beispielhaft dargestellten Doppelkupplungsgetriebes;
Fig. 2 eine schematische Ansicht einer möglichen Gesamtschaltungsanordnung bei dem Doppelkupplungsgetriebe gemäß Figur 1; und
Fig. 3 eine schematische Ansicht einer möglichen Ausführungsvariante einer erfindungsgemäßen Schaltungsanordnung für das Doppelkupplungsgetriebe.

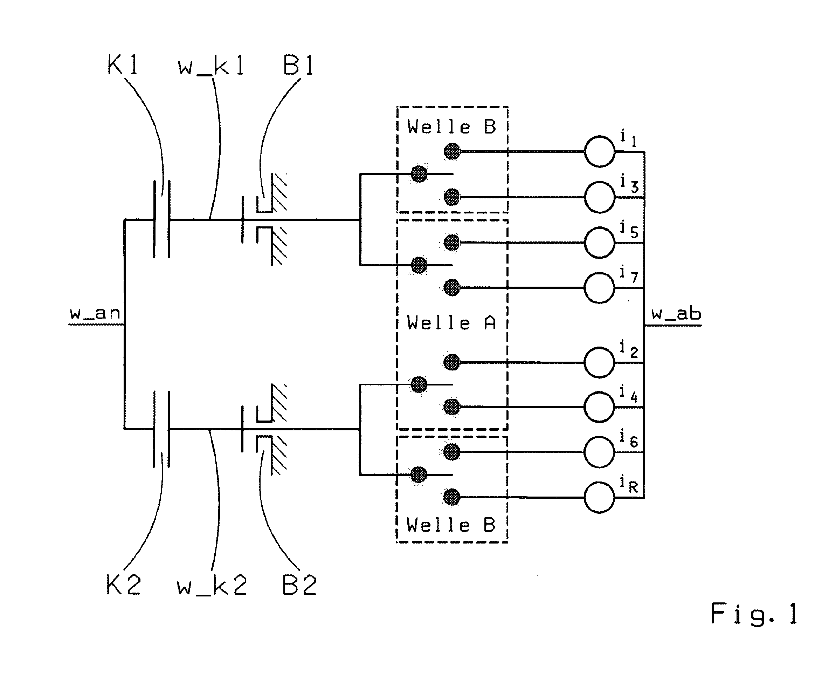

In Figur 1 ist beispielhaft ein mechanisches Prinzipbild eines zentral synchronisierten Doppelkupplungsgetriebes dargestellt. Die Antriebswelle w_an ist über zwei Kupplungen K1, K2 mit einer ersten Getriebeeingangswelle w_k1 und einer zweiten Getriebeeingangswelle w_k2 gekoppelt. Die erste Getriebeeingangswelle w_k1 bildet das erste Teilgetriebe und die zweite Getriebeeingangswelle w_k2 bildet das zweite Teilgetriebe. Die Festräder der beiden Getriebeeingangswelle w_k1, w_k2 stehen mit Losrädern einer ersten Welle A (erste Vorgelegewelle) und einer zweiten Welle B (zweite Vorgelegewelle) in Eingriff. Die schaltbaren Losräder können bei dem gezeigten Beispiel sieben Vorwärtsgangübersetzungen i₁, i₂, i₃, i₄, i₅, i₆, i₇ und eine Rückwärtsgangübersetzung i_{R} realisieren. Dazu werden die als Gangzahnräder ausgebildeten Losräder durch die Schalteinrichtungen geschaltet, welche wiederum durch Betätigungseinrichtungen bewegt werden. Als Schalteinrichtungen werden bei dem gezeigten Beispiel formschlüssige Schaltelemente, wie z.B. Klauenkupplungen verwendet. Als Betätigungseinrichtungen sind vorzugsweise elektromechanische Aktuatoren beispielsweise mit einem Elektromotor, der einen Spindeltrieb antreibt, vorgesehen, der das zugeordnete Schaltelemente bewegt. Ferner ist an jeder Welle A und B eine Getriebebremse B1 und B2 vorgesehen, um die Zentralsynchronisierung zu realisieren.

Bei dem zentral synchronisierten Doppelkupplungsgetriebe liegen die Betätigungseinrichtungen und die zugeordneten Schalteinrichtungen für jeweils ein Teilgetriebe in beziehungsweise an unterschiedlichen Wellen A und B. Da bei dem gezeigten Beispiel jede Betätigungseinrichtung jeweils einer Doppel-Schalteinrichtung zugeordnet sind, welche zwei Gangstufen schaltet, ist prinzipiell an einer Welle A, B kein gleichzeitiges Einlegen dieser beiden Gangstufen möglich. Es ist aber möglich, dass durch einen Steuerungsfehler eine zusätzliche Schalteinrichtung des gleichen Teilgetriebes in der jeweils anderen Welle A, B geschaltet wird. Dies wird durch das erfindungsgemäß vorgeschlagene Verfahren und die vorgeschlagene Schaltungsanordnung auf elektronischem Wege ohne mechanische Mittel verhindert.

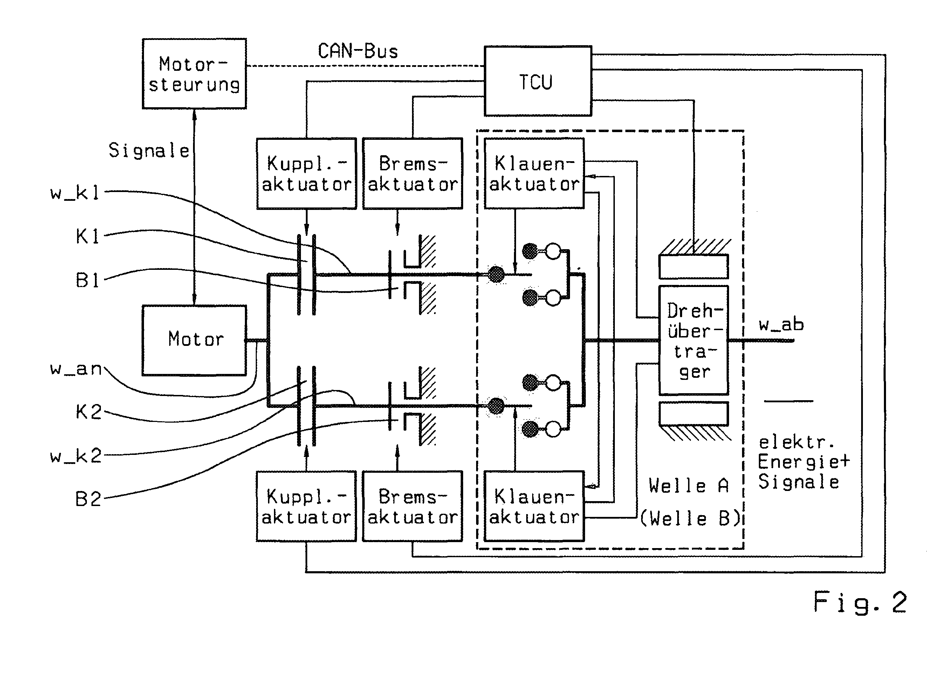

In Figur 2 ist ein Systembild einer Gesamtsteuerung des Doppelkupplungsgetriebes dargestellt, wobei die folgende Beschreibung im Wesentlichen nur auf die erfindungsgemäße Schaltungsanordnung bezogen ist.

Das dargestellte Systembild zeigt ein mögliches Steuerungskonzept für das zentral synchronisierte Doppelkupplungsgetriebe beispielhaft, wobei dies exemplarisch nur für die Welle A angedeutet ist. Insbesondere wird verdeutlicht, wie die Aktuatoren für die unterschiedlichen Getriebezweige beziehungsweise Teilgetriebe mit Energie- und Signalen gespeist werden. Beispielsweise wird gezeigt, dass die beiden Schaltaktuatoren Klaue 1 und Klaue 2 über zusätzliche Signalleitungen beziehungsweise Freigabeleitungen Signale austauschen können.

Ein zentrales Getriebe-Steuergerät TCU bzw. eine zentrale Getriebesteuerung versorgt u. a. die Betätigungseinrichtungen bzw. Schaltaktuatoren Klaue 1, Klaue 2 mit Stellenergie und Stellsignalen. In Fig. 2 ist exemplarisch für die Welle A demonstriert, wie die Betätigungseinrichtungen beziehungsweise Schalteinrichtungen für die unterschiedlichen Teilgetriebe mit Energie- und Signalen versorgt werden. Erfindungsgemäß ist vorgesehen, dass die beiden Betätigungseinrichtungen bzw. Schaltaktuatoren Klaue 1, Klaue 2 über zusätzliche Signalleitungen Signale austauschen. Das Steuergerät TCU schaltet zum Aktivieren einer Schalteinrichtung beziehungsweise Betätigungseinrichtung die Energieversorgung für die betreffende Welle frei und gibt der betreffenden Betätigungseinrichtung eine Sollposition vor. Die Vorortsteuerung µC der jeweiligen Betätigungseinrichtung Klaue 1, Klaue 2 interpretiert das Signal und gibt die Steuerungsbefehle an den Elektromotor weiter, der die gewünschte Schaltposition an der Schalteinrichtung einstellt.

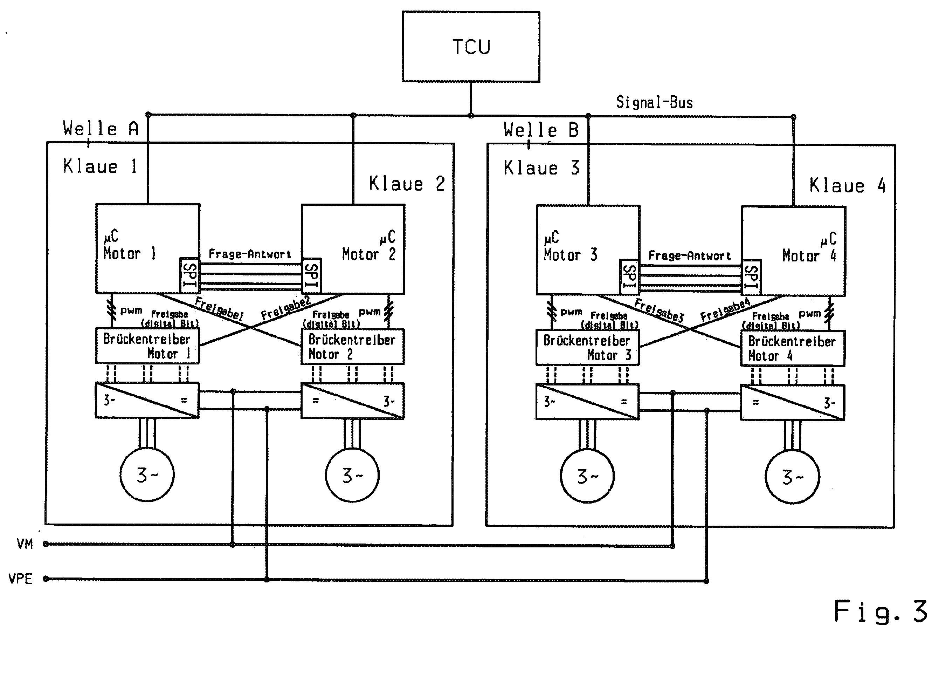

Figur 3 zeigt beispielhaft eine mögliche Schaltungsanordnung für die verschiedenen Betätigungseinrichtungen bzw. Schaltaktuatoren Klaue 1, Klaue 2, Klaue 3, Klaue 4 zum Sperren von unzulässigen Schaltvorgängen bei dem Doppelkupplungsgetriebe, wobei beispielsweise die Betätigungseinrichtungen bzw. die Schaltaktuatoren Klaue 1, Klaue 2; Klaue 3, Klaue 4 jeweils einen Elektromotor, der in Figur 3 mit Motor 1, Motor 2, Motor 3, Motor 4 bezeichnet wird, und jeweils einen vom Elektromotor angetriebenen Spindeltrieb zum Betätigen der zugeordneten Schalteinrichtung umfassen. Dabei sind die elektrischen Verbindungen beispielhaft über einen Signal-Bus zwischen dem übergeordneten Steuergerät TCU und den Vorortsteuerungen µC der Elektromotoren bzw. Motor 1, Motor 2, Motor 3, Motor 4 der Betätigungseinrichtungen exemplarisch in den beiden Wellen A und B als Innenbetätigung gezeigt.

Die Betätigungseinrichtungen bzw. Schaltaktuatoren sind in Figur 3 mit Klaue 1, Klaue 2, Klaue 3 und Klaue 4 bezeichnet. Die beiden Betätigungseinrichtungen Klaue 1 und Klaue 2 sind der Welle A und die Betätigungseinrichtungen Klaue 3 und Klaue 4 sind der Welle B zugeordnet. Dabei sind die Klaue 1 und die Klaue 3 dem ersten Teilgetriebe und die Klaue 2 und die Klaue 4 dem zweiten Teilgetriebe zugeordnet.

Die Ansteuerung der Leistungselektronik jeder Betätigungseinrichtung bzw. jedes Elektromotors wird in Figur 3 als Brückentreiber bezeichnet. Der Brückentreiber steuert eine Brückenschaltung mit mehreren Transistoren an. Die Leistungselektronik bzw. die Brückentreiber sind über eine Freigabeleitung, welche jeweils mit Freigabe (digital Bit) bezeichnet ist, an die Vorortsteuerung µC der jeweils benachbarten Betätigungseinrichtung beziehungsweise benachbarten Schaltaktuator Klaue 1 und Klaue 2 beziehungsweise Klaue 3 und Klaue 4 einer gemeinsamen Welle A bzw. B angeschlossen. Somit verbindet eine Freigabeleitung Freigabe 1 die Vorortsteuerung µC des Motors 1 der Klaue 1 mit dem Brückentreiber des Motors 2 der Klaue 2 und eine weitere Freigabeleitung Freigabe 2 die Vorortsteuerung µC des Motors 2 der Klaue 2 mit dem Brückentreiber des Motors 1 der Klaue 1 bei der Welle A. Ferner verbindet eine Freigabeleitung Freigabe 3 die Vorortsteuerung µC des Motors 3 der Klaue 3 mit dem Brückentreiber des Motors 4 der Klaue 4 und eine weitere Freigabeleitung Freigabe 4 die Vorortsteuerung µC des Motors 4 der Klaue 4 mit dem Brückentreiber des Motors 3 der Klaue 3 bei der Welle B. Zudem sind alle Schaltaktuatoren Klaue 1, Klaue 2, Klaue 3, Klaue 4 über den Signalbus untereinander und mit dem Steuergerät TCU daten- und signaltechnisch verbunden. Des Weiteren sind Verbindungsmöglichkeiten Frage-Antwort zum Daten und Signalaustausch zwischen den Vorortsteuerungen µC der Schaltaktuatoren Klaue 1 und Klaue 2 bzw. Klaue 3 und Klaue 4 einer Welle A bzw. B vorgesehen.

Um unzulässige Schaltvorgänge zweier Betätigungseinrichtungen bzw. Schaltaktuatoren Klaue 1 und Klaue 3 bzw. Klaue 2 und Klaue 4 in einem Teilgetriebe zuverlässig zu verhindern, wird vorausgesetzt, dass dem Steuergerät TCU die aktuellen Schaltpositionen der Betätigungseinrichtungen bekannt sind. Die Betätigungseinrichtungen sollten nicht gleichzeitig Schaltbefehle über den Signal-Bus von dem Steuergerät TCU erhalten. Ohne Schaltbefehl sperren sich demnach alle Vorortsteuerungen µC der Betätigungseinrichtungen gegenseitig.

Vorzugsweise sind eine elektrische Energieversorgung der Leistungselektronik bzw. die Brückentreiber der Betätigungseinrichtungen nur bei Änderungen der Schaltposition erforderlich. Somit wird die Schaltposition ansonsten ohne elektrische Energiezufuhr beibehalten. Beispielsweise kann dies dadurch erreicht werden, dass ein Rastmoment des Motors, eine Selbsthemmung oder ein Sperren der rotatorischen oder translatorischen Bewegung durch formschlüssige oder reibschlüssige Elemente verwendet werden.

Bei dem ersten Verriegelungskonzept kann somit die jeweils nicht aktive Vorortsteuerung µC der Betätigungseinrichtung in einer Welle A, B den Schaltbefehl für die jeweils aktive Vorortsteuerung µC erkennen und dann die Leistungselektronik beziehungsweise den Brückentreiber der benachbarten aktiven Betätigungseinrichtung freischalten. Dies kann durch eine Freigabe z. B. der elektrischen Versorgung der Leistungsstufen oder durch Freigabe der Leistungselektronik erfolgen. Wenn der Schaltbefehl des übergeordneten Steuergerätes TCU nach Durchführung der Schaltung wegfällt, wird die Ansteuerung der Betätigungseinrichtung unverzüglich wieder gesperrt bzw. die Freigabe entzogen werden.

Bei einem zweiten möglichen Verriegelungskonzept kann vorgesehen sein, dass die inaktiven Vorortsteuerungen µC der Betätigungseinrichtungen über die Sensorinformationen der jeweils anderen Vorortsteuerung µC verfügen. Zusätzlich ist allen Vorortsteuerungen µC der Betätigungseinrichtungen der gegenwärtige Gesamtgetriebe-Schaltzustand und bei Schaltvorgängen der neue Sollzustand bekannt. Damit verfügt jede Vorortsteuerung µC der Betätigungseinrichtungen über die notwendigen Informationen, die zur Überwachung der jeweils anderen Vorortsteuerung µC notwendig sind. Bei dieser Art des Verriegelungskonzeptes können die Vorortsteuerungen µC der Betätigungseinrichtungen z.B. die Sollposition aktiv einregeln. Erst, wenn der zulässige Positionsbereich verlassen wird, schaltet die jeweils andere Vorortsteuerung µC die Versorgung der fehlerhaften Vorortsteuerung µC ab bzw. entzieht die Freigabe. Zusätzlich informiert die Vorortsteuerung µC, die eine unzulässige Abweichung festgestellt hat, das übergeordnete Steuergerät TCU über diesen Umstand. Die Sensorinformationen der Vorortsteuerungen µC können zum Beispiel Hallsensorimpulse an den Wellen der Elektromotoren bzw. Motor 1, Motor 2, Motor 3 Motor 4 der Betätigungseinrichtungen oder zum Beispiel Winkelgebersignale oder Linearsensoren sein.

Der Zustand des Getriebes kann zum Beispiel durch den Istgang beschrieben werden oder z.B. durch die Ist-Positionssignale aller Betätigungseinrichtungen bzw. Schaltaktuatoren Klaue 1, Klaue 2, Klaue 3, Klaue 4. Die Vorgabe der zulässigen Positionsstellbereiche jeder Vorortsteuerung µC der Betätigungseinrichtungen kann auch von dem übergeordneten Steuergerät TCU ersatzweise vorgegeben werden.

### Bezugszeichen

- w_an: Antriebswelle
- w_ab: Abtriebswelle
- w_k1: erste Getriebeeingangswelle
- w_k2: zweite Getriebeeingangswelle
- K1: erste Kupplung
- K2: zweite Kupplung
- B1: Getriebeeingangswellenbremse
- B2: Getriebeeingangswellenbremse
- Welle A: erste Vorgelegewelle
- Welle B: zweite Vorgelegewelle
- i₁: erste Vorwärtsgangübersetzung
- i₂: zweite Vorwärtsgangübersetzung
- i₃: dritte Vorwärtsgangübersetzung
- i₄: vierte Vorwärtsgangübersetzung
- i₅: fünfte Vorwärtsgangübersetzung
- i₆: sechste Vorwärtsgangübersetzung
- i₇: siebente Vorwärtsgangübersetzung
- i_{R}: Rückwärtsgangübersetzung
- µC: Vorortsteuerung
- TCU: Getriebesteuergerät
- Motor 1: Elektromotor der Betätigungseinrichtung
- Motor 2: Elektromotor der Betätigungseinrichtung
- Motor 3: Elektromotor der Betätigungseinrichtung
- Motor 4: Elektromotor der Betätigungseinrichtung
- Klaue 1: Schaltaktuator des ersten Teilgetriebes
- Klaue 2: Schaltaktuator des zweiten Teilgetriebes
- Klaue 3: Schaltaktuator des ersten Teilgetriebes
- Klaue 4: Schaltaktuator des zweiten Teilgetriebes

## Patentansprüche

1. Verfahren zum Sperren von unzulässigen Schaltvorgängen bei einem Getriebe mit mehreren Schalteinrichtungen, die zum Durchführen eines Schaltvorganges von Betätigungseinrichtungen bewegt werden, wenn ein Schaltbefehl von einem Steuergerät (TCU) an die jeweilige Betätigungseinrichtung ausgegeben wird, **dadurch gekennzeichnet, dass** die Betätigungseinrichtungen zum Datenaustausch derart untereinander und mit dem Steuergerät (TCU) verbunden werden, dass die Ansteuerung der Betätigungseinrichtung der zu schaltenden Schalteinrichtung in Abhängigkeit der Freigabe mindestens einer weiteren Betätigungseinrichtung durchgeführt wird.

2. Verfahren nach Anspruch 1, **dadurch gekennzeichnet, dass** an die Vorortsteuerung (µC) jeder Betätigungseinrichtung Zustandsinformationen der Vorortsteuerung (µC) der jeweils anderen Betätigungseinrichtungen übertragen werden, so dass eine gegenseitige Überwachung der Vorortsteuerungen (µC) der Betätigungseinrichtungen durchgeführt wird.

3. Verfahren nach Anspruch 2, **dadurch gekennzeichnet, dass** die Zustandsinformationen über das Steuergerät (TCU) übertragen werden.

4. Verfahren nach Anspruch 2 oder 3, **dadurch gekennzeichnet, dass** die Zustandsinformationen über einen Hallsensor, einen Winkelgeber oder einem Linearsensor erhalten werden.

5. Verfahren nach einem der Ansprüche 2 bis 4, dadurch **gekennzei chnet,** dass durch die Vorortsteuerung (µC) jeder Betätigungseinrichtung eine vom Steuergerät (TCU) vorgegebene Sollposition aktiv eingeregelt wird, wobei die Freigabe durch die Vorortsteuerungen (µC) der jeweils anderen Betätigungseinrichtungen entzogen wird, wenn ein Verlassen eines zulässigen Positionsbereiches der zugeordneten Schalteinrichtung erkannt wird.

6. Verfahren nach einem der Ansprüche 2 bis 5, dadurch **gekennzei chnet,** dass durch die Vorortsteuerung (µC) jeder Betätigungseinrichtung eine vom Steuergerät (TCU) vorgegebene Sollposition aktiv eingeregelt wird, wobei die Freigabe durch das Steuergerät (TCU) entzogen wird, wenn ein Verlassen eines zulässigen Positionsbereiches der zugeordneten Schalteinrichtung erkannt wird.

7. Verfahren nach Anspruch 5 oder 6, **dadurch gekennzeichnet, dass** die zulässigen Positionsbereiche für die Vorortsteuerung (µC) jeder Betätigungseinrichtung durch das Steuergerät (TCU) vorgegeben werden.

8. Verfahren nach einem der Ansprüche 5 bis 7, dadurch **gekennzei chnet,** dass die Information über das Verlassen des zulässigen Positionsbereiches an das Steuergerät (TCU) übertragen wird.

9. Verfahren nach einem der vorangehenden Ansprüche, dadurch **gek ennzeichnet,** dass ein an eine Vorortsteuerung (µC) einer Betätigungseinrichtung ausgegebener Schaltbefehl auch an die Vorortsteuerung (µ) jeder inaktiven Betätigungseinrichtung übertragen wird, wobei bei Erkennen eines zulässigen Schaltbefehls ein entsprechendes Freigabesignal von den Vorortsteuerungen der inaktiven Betätigungseinrichtungen an die Vorortsteuerung (µC) der aktiven Betätigungseinrichtung gesendet wird.

10. Verfahren nach einem der vorangehenden Ansprüche, dadurch **gek ennzeichnet**, dass, wenn die Betätigungseinrichtungen für ein Teilgetriebe eines Doppelkupplungsgetriebes in unterschiedlichen Wellen (A, B) angeordnet werden, die Betätigungseinrichtungen (Klaue 1, Klaue 2; Klaue 3, Klaue 4) einer Welle (A; B) sich gegenseitig überwachen.

11. Verfahren nach Anspruch 10, **dadurch gekennzeichnet, dass** bei den Betätigungseinrichtungen einer Welle (A; B) durch die Vorortsteuerung (µC) der nicht aktiven Betätigungseinrichtung die Freigabe der jeweils anderen Betätigungseinrichtung bei einem zulässigen Schaltbefehl geschaltet wird.

12. Verfahren nach einem der Ansprüche 4 bis 11, dadurch **gekennz eichnet**, dass ein Abschalten der Freigabe ein Abschalten der Leistungselektronik der aktiven Betätigungseinrichtung bewirkt.

13. Schaltungsanordnung für ein Getriebe mit einem Steuergerät und mehreren Betätigungseinrichtungen zum Betätigen von Schalteinrichtungen, wobei die Betätigungseinrichtungen zumindest einer Welle (A, B) zugeordnet sind, **dadurch gekennzeichnet, dass** die Betätigungseinrichtungen zum Datenaustausch derart untereinander und mit dem Steuergerät (TCU) verbunden sind, dass die Ansteuerung der Betätigungseinrichtung der zu schaltenden Schalteinrichtung in Abhängigkeit einer Freigabe mindestens einer weiteren Betätigungseinrichtung durchführbar ist.

14. Schaltungsanordnung nach Anspruch 13, dadurch **gekennzeic hnet**, dass bei einem Doppelkupplungsgetriebe die Betätigungseinrichtungen für ein Teilgetriebe in unterschiedlichen Wellen (A, B) angeordnet sind, wobei die Betätigungseinrichtungen einer Welle (A, B) sich gegenseitig freigeben.

15. Schaltungsanordnung nach Anspruch 14, dadurch **gekennzeic hnet**, dass jeweils eine Freigabeleitung (Freigabe 1, Freigabe 2, Freigabe 3, Freigabe 4) zum gegenseitigen Freigeben zwischen den Betätigungseinrichtungen einer Welle (A, B) vorgesehen ist.

16. Schaltungsanordnung nach Anspruch 15, dadurch **gekennzeic hnet**, dass jeweils die Vorortsteuerung (µC) einer Betätigungseinrichtung mit der Leistungselektronik (Brückentreiber) der weiteren Betätigungseinrichtung über die Freigabeleitung (Freigabe 1, Freigabe 2, Freigabe 3, Freigabe 4) verbunden ist.

## Claims

1. Method for blocking inadmissible shift processes in a gearbox having multiple shift devices which, in order to carry out a shift process, are moved by actuating devices when a shift command is output by a control unit (TCU) to the respective actuating device, **characterized in that** the actuating devices are connected to one another and to the control unit (TCU) for data exchange in such a way that the activation of the actuating device of the shift device to be shifted is carried out as a function of the release of at least one further actuating device.

2. Method according to Claim 1, **characterized in that**, to the local controller (µC) of each actuating device, there is transmitted state information from the local controller (µC) of the in each case other actuating devices, such that mutual monitoring of the local controllers (µC) of the actuating devices is carried out.

3. Method according to Claim 2, **characterized in that** the state information is transmitted via the control unit (TCU).

4. Method according to Claim 2 or 3, **characterized in that** the state information is obtained using a Hall sensor, an angle sensor or a linear sensor.

5. Method according to one of Claims 2 to 4, **characterized in that** the local controller (µC) of each actuating device actively adjusts to a setpoint position predefined by the control unit (TCU), wherein the release by the local controllers (µC) of the in each case other actuating devices is withdrawn if a departure from an admissible position range of the associated shift device is detected.

6. Method according to one of Claims 2 to 5, **characterized in that** the local controller (µC) of each actuating device actively adjusts to a setpoint position predefined by the control unit (TCU), wherein the release by the control unit (TCU) is withdrawn if a departure from an admissible position range of the associated shift device is detected.

7. Method according to Claim 5 or 6, **characterized in that** the admissible position ranges for the local controller (µC) of each actuating device are predefined by the control unit (TCU).

8. Method according to one of Claims 5 to 7, **characterized in that** the information regarding the departure from the admissible position range is transmitted to the control unit (TCU).

9. Method according to one of the preceding claims, **characterized in that** a shift command output to a local controller (µC) of an actuating device is also transmitted to the local controller (µC) of each inactive actuating device, wherein if an admissible shift command is detected, a corresponding release signal is sent from the local controllers of the inactive actuating devices to the local controller (µC) of the active actuating device.

10. Method according to one of the preceding claims, **characterized in that**, if the actuating devices for one component gearbox of a double clutch gearbox are arranged in different shafts (A, B), the actuating devices (jaw 1, jaw 2; jaw 3, jaw 4) of one shaft (A; B) monitor one another.

11. Method according to Claim 10, **characterized in that**, of the actuating devices of one shaft (A; B), the local controller (µC) of the non-active actuating device activates the release of the in each case other actuating device in the event of an admissible shift command.

12. Method according to one of Claims 4 to 11, **characterized in that** a deactivation of the release causes a deactivation of the power electronics of the active actuating device.

13. Shift arrangement for a gearbox, having a control unit and a plurality of actuating devices for actuating shift devices, wherein the actuating devices are assigned at least one shaft (A, B), **characterized in that** the actuating devices are connected to one another and to the control unit (TCU) for data exchange in such a way that the activation of the actuating device of the shift device to be shifted can be carried out as a function of a release of at least one further actuating device.

14. Shift arrangement according to Claim 13, **characterized in that**, in the case of a double clutch gearbox, the actuating devices for one component gearbox are arranged in different shafts (A, B), wherein the actuating devices of one shaft (A, B) release one another.

15. Shift arrangement according to Claim 14, **characterized in that** in each case one release line (release 1, release 2, release 3, release 4) is provided for mutual releasing between the actuating devices of one shaft (A, B).

16. Shift arrangement according to Claim 15, **characterized in that** in each case the local controller (µC) of one actuating device is connected to the power electronics (bridge driver) of the further actuating device via the release line (release 1, release 2, release 3, release 4).

## Revendications

1. Procédé de blocage d'opérations inadmissibles de changement de rapport sur une transmission qui présente plusieurs dispositifs de changement de rapport déplacés pour exécuter une opération de changement de rapport au moyen de dispositifs d'actionnement lorsqu'un ordre de changement de rapport est délivré par un appareil de commande (TCU) au dispositif d'actionnement concerné, **caractérisé en ce que**
les dispositifs d'actionnement sont reliés les uns aux autres et à l'appareil de commande (TCU) en vue d'un échange de données de telle sorte que la commande du dispositif d'actionnement du dispositif de changement de rapport à actionner est exécutée en fonction de la libération d'au moins un autre dispositif d'actionnement.

2. Procédé selon la revendication 1, **caractérisé en ce que** des informations d'état d'une commande sur site (µC) de chaque dispositif d'actionnement sont transmises à la commande sur site (µC) de chacun des autres dispositifs d'actionnement de manière à réaliser une surveillance mutuelle des commandes sur site (µC) des dispositifs d'actionnement.

3. Procédé selon la revendication 2, **caractérisé en ce que** les informations d'état sont transmises par l'intermédiaire de l'appareil de commande (TCU).

4. Procédé selon les revendications 2 ou 3, **caractérisé en ce que** les informations d'état sont obtenues à partir d'un détecteur de Hall, d'un détecteur d'angle ou d'un détecteur linéaire.

5. Procédé selon l'une des revendications 2 à 4, **caractérisé en ce qu'**une position de consigne prédéterminée est régulée de manière active par l'appareil de commande (TCU) par l'intermédiaire de la commande sur site (µC) de chaque dispositif d'actionnement, la libération par les commandes sur site (µC) de chacun des autres dispositifs d'actionnement étant supprimée lorsqu'il est constaté qu'une plage de positions admissibles du dispositif de changement de rapport associé est quittée.

6. Procédé selon l'une des revendications 2 à 5, **caractérisé en ce qu'**une position de consigne prédéterminée est régulée de manière active par l'appareil de commande (TCU) par l'intermédiaire de la commande sur site (µC) de chaque dispositif d'actionnement, la libération par l'appareil de commande (TCU) étant supprimée lorsqu'il est constaté qu'une plage de positions admissibles du dispositif de changement de rapport associé est quittée.

7. Procédé selon les revendications 5 ou 6, **caractérisé en ce que** les plages de positions admissibles sont prédéterminées par l'appareil de commande (TCU) pour la commande sur site (µC) de chaque dispositif d'actionnement.

8. Procédé selon l'une des revendications 5 à 7, **caractérisé en ce que** les informations indiquant que la plage de positions admissibles est quittée sont transmises à l'appareil de commande (TCU).

9. Procédé selon l'une des revendications précédentes, **caractérisé en ce qu'**un ordre de changement de rapport délivré à une commande sur site (µC) d'un dispositif d'actionnement est également transmis à la commande sur site (µC) de chaque dispositif d'actionnement inactif et **en ce que** lorsqu'il est constaté qu'un ordre de changement de rapport est admissible, un signal approprié de libération est envoyé par les commandes sur site des dispositifs d'actionnement inactifs à la commande sur site (µC) du dispositif d'actionnement actif.

10. Procédé selon l'une des revendications précédentes, **caractérisé en ce que** si les dispositifs d'actionnement d'une partie d'une transmission à double embrayage sont disposés dans des arbres (A, B) différents, les dispositifs d'actionnement (griffes 1, griffes 2; griffes 3, griffes 4) d'un arbre (A; B) se surveillent mutuellement.

11. Procédé selon la revendication 10, **caractérisé en ce que** pour les dispositifs d'actionnement d'un arbre (A; B), la libération des autres dispositifs d'actionnement est branchée par la commande sur site (µC) du dispositif d'actionnement non actif en cas d'ordre de changement de rapport admissible.

12. Procédé selon l'une des revendications 4 à 11, **caractérisé en ce que** le débranchement de la libération a pour effet un débranchement de l'électronique de puissance du dispositif d'actionnement actif.

13. Circuit destiné à une transmission dotée d'un appareil de commande et de plusieurs dispositifs d'actionnement qui actionnent des dispositifs de changement de rapport, les dispositifs d'actionnement étant associés à au moins un arbre (A, B),
**caractérisé en ce que**
les dispositifs d'actionnement sont reliés les uns aux autres et à l'appareil de commande (TCU) en vue d'un échange de données de telle sorte que la commande du dispositif d'actionnement du dispositif de changement de rapport à actionner puisse être exécutée en fonction de la libération d'au moins un autre dispositif d'actionnement.

14. Circuit selon la revendication 13, **caractérisé en ce que** pour une transmission à double embrayage, les dispositifs d'actionnement d'une partie de la transmission sont disposés dans des arbres (A, B) différents, les dispositifs d'actionnement d'un arbre (A, B) se libérant mutuellement.

15. Circuit selon la revendication 14, **caractérisé en ce qu'**un conducteur de libération (libération 1, libération 2, libération 3, libération 4) est prévu pour permettre une libération mutuelle entre les dispositifs d'actionnement d'un arbre (A, B).

16. Circuit selon la revendication 15, **caractérisé en ce que** la commande sur site (µC) d'un dispositif d'actionnement est reliée à l'électronique de puissance (pilote de pont) de l'autre dispositif d'actionnement par l'intermédiaire du conducteur de libération (libération 1, libération 2, libération 3, libération 4) .
